# EUROPÄISCHE PATENTSCHRIFT

(11) **EP 3 485 149 B1**
(45) Veröffentlichungstag und Bekanntmachung des Hinweises auf die Patenterteilung: **15.09.2021**
(21) Anmeldenummer: 17737557.3
(22) Anmeldetag: 07.07.2017
(51) Int. Cl.: F01L 1/047, B25B 27/00, F16H 7/24, B23P 19/00, F01L 1/053

(54) **MONTAGEHILFE, NOCKENWELLENMODUL UND VERFAHREN ZUR FIXIERUNG DER DREHPOSITION VON DREHBAR GELAGERTEN WELLEN**
ASSEMBLY AID, CAMSHAFT MODULE, AND METHOD FOR FIXING THE ROTATIONAL POSITION OF ROTATABLY MOUNTED SHAFTS
DISPOSITIF D'AIDE AU MONTAGE, MODULE D'ARBRES À CAMES ET PROCÉDÉ PERMETTANT DE FIXER LA POSITION DE ROTATION D'ARBRES ROTATIFS

(30) Priorität: 14.07.2016 DE 102016112994
(43) Veröffentlichungstag der Anmeldung: 22.05.2019
(73) Patentinhaber: ThyssenKrupp Presta TecCenter AG, 9492 Eschen (LI); thyssenkrupp AG, 45143 Essen (DE)
(72) Erfinder: SCHMID, Heiko, 9493 Mauren (LI)
(74) Vertreter: thyssenkrupp Intellectual Property GmbH
(86) Internationale Anmeldenummer: PCT/EP2017/067115
(87) Internationale Veröffentlichungsnummer: WO 2018/011083

(56) Entgegenhaltungen:
- CN-A- 103 831 624
- CN-A- 103 831 624
- DE-A1-102010 017 728
- DE-A1-102010 017 728
- GB-A- 2 381 563
- GB-A- 2 381 563
- US-A1- 2003 084 557
- US-A1- 2003 084 557
- US-A1- 2008 146 389
- US-A1- 2008 146 389
- US-A1- 2011 197 411
- US-A1- 2011 197 411

## Beschreibung

Die Erfindung betrifft eine Montagehilfe zur Fixierung der Drehposition von drehbar gelagerten Wellen gemäß dem Oberbegriff des Patentanspruchs 1. Ferner betrifft die Erfindung ein Nockenwellenmodul und ein Verfahren zur Fixierung der Drehposition von drehbar gelagerten Wellen.

Ein Modul mit vororientierter Nockenwelle ist aus der DE 10 2014 104 995 A1 bekannt. Das Modul besteht aus einer Abdeckhaube, die zum Aufsetzen auf einen Zylinderkopf geeignet ist. Die Haube weist zwei Bohrungen auf, aus denen die Nockenwellen herausragen. Ferner weist die Haube eine Aufnahme in Form einer Sicherungsbohrung auf, um ein Sicherungsteil aufzunehmen. Das Sicherungsteil wird in die Aufnahme geschoben und durchgreift eine weitere Ausnehmung im Nockenwellenrad und sichert somit die Nockenwelle gegen Verdrehen.

DE 38 32 812 A1 offenbart eine Vorrichtung zur Einstellung der Steuerzeiten an einer Brennkraftmaschine, deren Nockenwelle über einen Zahnriemen, eine Kette oder auch einen Zahnrädertrieb angetrieben werden. Zur Einstellung der Steuerzeiten greifen Einstellstifte in die Nocken- oder Kurbelwellen ein, um diese in einer definierten Position zu halten. Die Einstellstifte werden in eine Bohrung am Kurbelgehäuse eingedreht, bis die Spitzen der Einstellstifte in eine weitere Bohrung an den Nocken- oder Kurbelwellen eingreifen.

Die bekannten Sicherungselemente können jeweils nur eine einzige Welle fixieren. Zudem werden zusätzliche Bohrungen in der Abdeckhaube bzw. im Kurbelgehäuse benötigt. Dies erschwert es zudem, die richtige Position der Nocken- oder Kurbelwellen zum Sichern zu finden, da die Gehäuse die Bohrungen in den Wellen verdecken und diese nur durch die Bohrungen sichtbar sind. Damit kann nicht ohne größeren Aufwand verifiziert werden, ob die Wellen tatsächlich gesichert sind. Ein weiterer Nachteil ist, dass jede Welle einzeln fixiert werden muss, was zu weiteren Fehlern bei der Montage oder Demontage führen kann, wenn z.B. ein Sicherungsteil vorzeitig entfernt wird und sich die dazugehörige Welle gegenüber einer weiteren noch fixierten Welle verdreht.

Aus der CN 103 831 624 A ist eine Montagehilfe gemäß dem Oberbegriff des Anspruchs 1 bekannt geworden. Auch mit dieser Montagehilfe ist die Fixierung der Drehposition von drehbar gelagerten Nockenwellen möglich. Im Hinblick auf die Handhabbarkeit einer derartigen Vorrichtung ist jedoch noch Raum für Verbesserungen.

Der Erfindung liegt daher die Aufgabe zugrunde, eine Montagehilfe anzugeben, die eine zuverlässige und einfache Fixierung der Drehposition von drehbar gelagerten Nockenwellen ermöglicht. Der Erfindung liegt ferner die Aufgabe zu Grunde ein Nockenwellenmodul und ein Verfahren zur Fixierung der Drehposition von drehbar gelagerten Wellen anzugeben.

Diese Aufgabe wird erfindungsgemäß durch eine Montagehilfe mit den Merkmalen des Anspruchs 1 gelöst. Ferner wird die Aufgabe im Hinblick auf das Nockenwellenmodul durch den Gegenstand des Anspruchs 13 gelöst. Im Hinblick auf das Verfahren wird die Aufgabe durch den Gegenstand des Anspruchs 14 gelöst.

Die Erfindung beruht auf dem Gedanken, eine Montagehilfe zur Fixierung der Drehposition von drehbar gelagerten Wellen anzugeben. Die Montagehilfe weist mindestens zwei parallele Dorne auf, die durch eine Brücke miteinander verbunden sind, wobei jedem Dorn ein Positionierelement zugeordnet ist, das zumindest abschnittsweise exzentrisch zu dem jeweiligen Dorn angeordnet ist und ferner dadurch, dass jeweils ein Dorn der Montagehilfe in eine stirnseitige Aufnahmebohrung einer der Nockenwellen und das jeweils zugehörige Positionierelement in eine stirnseitige Positioniernut dieser Nockenwelle einschiebbar sind.

Die Erfindung hat den Vorteil, dass mit einer einzigen Montagehilfe wenigstens zwei Wellen, insbesondere Nockenwellen, gleichzeitig gesichert und vororientiert werden können. Daher ist sichergestellt, dass sich die Nockenwellen nach der Montage und beim Transport nicht verdrehen. Die Nockenwellen können somit schon beim Komponentenlieferanten vororientiert und transportsicher zum Fahrzeughersteller transportiert werden, der diese nicht noch für den Einbau ausrichten muss. Üblicherweise werden die Nockenwellen erst unmittelbar vor der Montage mit dem Zylinderkopf beim Fahrzeughersteller manuell oder in einer aufwendigen automatisierten Vorrichtung ausgerichtet.

Ein weiterer Vorteil der Erfindung ist, dass die Montaghilfe nach der Montage der Nockenwellen einfach aus den Aufnahmebohrungen gezogen werden kann und die Nockenwellen sofort montagebereit ist. Dadurch wird der Zeitaufwand für die Montage verringert.

Besonders vorteilhaft ist, dass die Montagehilfe die Nockenwellen untereinander, d.h. durch Interaktion zwischen den Nockenwellen sichert. Die Sicherung erfolgt nicht durch eine Verbindung der Nockenwellen mit anderen Bauteilen in der Umgebung der Nockenwellen. Infolgedessen müssen keine zusätzlichen Ausnehmung oder Bohrungen in anderen Bauteilen, wie z.B. dem Gehäuse, vorgenommen werden, die präzise gefertigt werden müssen, damit diese mit den Ausnehmungen, Nuten oder Bohrungen der Nockenwellen fluchten. Durch die einfache Montage werden zusätzliche Arbeitsschritte und Zeitaufwand eingespart.

Bevorzugte Ausführungsformen der Erfindung sind in den Unteransprüchen angegeben.

Bei einer bevorzugten Ausführungsform ist das Positionierelement radial von dem Dorn beabstandet angeordnet. Das Positionierelement ist also nicht direkt an dem Dorn angeordnet, sondern kann z.B. am Rand eines Tellers angeordnet sein, in dessen Mitte sich der Dorn befindet. Dadurch kann eine entsprechende Positionierungsnut der Welle außen am Wellenrand angeordnet sein.

In einer weiteren Ausführungsform sind die Positionierelemente bezüglich des jeweils zugeordneten Dorns in verschiedenen Drehwinkeln ausgerichtet. Folglich können die Wellen in einem beliebigen Winkel zueinander ausgerichtet werden, da die Positionierelemente den Drehwinkel der Wellen vorgeben. Somit können je nach Herstellervorgaben bzw. Kundenwünschen die Wellen in einem genau definierten Drehwinkel vororientiert und einbaufertig geliefert werden.

In einer besonders bevorzugten Ausführungsform weisen die Dorne der Montagehilfe eine sich verjüngende Spitze auf. Mit der sich verjüngende Spitze lassen sich die Dorne leichter in die stirnseitigen Aufnahmebohrungen der Wellen einführen. Folglich lässt sich die Montagehilfe schneller und einfacher montieren.

Bei einer bevorzugten Ausführungsform weist die Brücke der Montagehilfe zwei Endsegmente und ein Verbindungssegment auf, wobei die Brücke zwischen dem Verbindungssegment und den Endsegmenten abgekröpft ist. Durch die Abkröpfung der Segmente zueinander wird ein Abstand des Verbindungssegments parallel zur Querebene der Dorne geschaffen. Dadurch kann Material bei der Herstellung der Montagehilfe eingespart werden.

Vorzugsweise ist die Brücke der Montagehilfe als C-förmiger Griff ausgebildet. Aufgrund dessen lässt sich die Montagehilfe leichter montieren, da ein Monteur durch die Griffform die Brücke sicher greifen und die Dorne einführen oder herausziehen kann.

Vorteilhafterweise weist die Brücke der Montagehilfe, insbesondere die Endsegmente und/oder das Verbindungssegment, Verstärkungsrippen auf. Die Verstärkungsrippen erhöhen die Stabilität und Steifigkeit der Montaghilfe und erhöhen somit die Transportsicherheit.

In einer weiteren Ausführungsform ist ein Teller zwischen der Brücke und dem Dorn ausgebildet, der sich senkrecht zur Längsachse des Dorns erstreckt. Der Teller bietet den Vorteil, dass sich dieser über die stirnseitigen Bohrungen der Wellen erstreckt und diese folglich gegen Verschmutzung schützt. Darüber hinaus dichtet der Teller die Aufnahmebohrungen gegen das Eindringen von Flüssigkeiten, z. B. auf dem Transportweg, ab.

Der Teller weist vorzugsweise mindestens eine Ausnehmung auf, wobei das Positionierelement und/oder der Dorn in der Ausnehmung angeordnet ist. Hierdurch kann das Positionierelement tiefer in die Positionierungsnut der Welle eingeführt werden, da durch die Ausnehmung mögliche Rundungen des Positionierelements zum Teller in der Ausnehmung liegen und versenkt sind. Daher schließt der Teller bündig mit der Welle ab und es entsteht kein Luftspalt, durch welchen Schmutz oder Flüssigkeiten in die stirnseitigen Aufnahmebohrungen der Wellen eindringen könnten.

Auf einer von dem Dorn abgewandten Seite des Tellers ist vorteilhafterweise ein T-förmiger Griff ausgebildet. Dieser Griff erlaubt dem Monteur eine noch bessere Kontrolle bei dem Einführen der Dorne in die stirnseitigen Aufnahmebohrungen der Wellen, da die Längsachse des T-förmigen Griffs kongruent mit der Längsachsachse der Dorne ist. Daher neigt die Montagehilfe beim Herausziehen nicht zum Verkanten. Weiterhin bietet die T-Form eine gute Grifffläche.

Die Montagehilfe ist in einer bevorzugten Ausführungsform einteilig, insbesondere aus Kunststoff, gefertigt. Dies bietet den Vorteil, dass die Montagehilfe in nur einem Verfahrensschritt z.B. in einem Spritzgussverfahren, wie Thermoplast-Spritzgießen, Duroplast-Spritzgießen, Elastomer-Spritzgießen aber auch additive Verfahren sind denkbar, gefertigt werden kann. Dadurch kann die Montagehilfe als direkt verwendbares Formteil in großer Stückzahl kostengünstig hergestellt werden oder additiv in kleiner Stückzahl für spezielle Wellen hergestellt werden.

Vorzugsweise wird die Montagehilfe mehrteilig gefertigt, wobei die Brücke lösbar mit den Dornen und/oder mit den Tellern verbunden ist. Dies ermöglicht, die Dorne einzeln in die stirnseitigen Aufnahmebohrungen der Wellen einzuschieben und diese mit den Dornen und eventuellem T-förmigen Griff zu drehen, um anschließend die Brücke definiert mit den Dornen und/oder Tellern zu verbinden. Dadurch wird das Drehen der Wellen für den Monteur erleichtert.

Im Rahmen der Erfindung wird weiterhin ein Nockenwellenmodul mit einer Montagehilfe angegeben und zwei parallel angeordneten Nockenwellen angegeben, die jeweils eine stirnseitige Aufnahmebohrung und eine stirnseitige Positioniernut aufweisen, wobei jeweils ein Dorn der Montagehilfe in eine Aufnahmebohrung und ein Positionierelement in eine Positioniernut eingreifen derart, dass eine relative Drehorientierung der Nockenwellen zueinander festgelegt ist. Vorteilhafterweise kann das Nockenwellenmodul mithilfe der Montagehilfe schon beim Komponentenlieferanten vollständig montiert und vororientiert werden. Demzufolge kann der Fahrzeughersteller das Nockenwellenmodul unmittelbar auf den Zylinderkopf montieren und anschließend die Montaghilfe entfernen und entsorgen. Die Montagehilfe kann auch umweltschonend zum Komponentenlieferanten zurückgeschickt und wiederverwendet werden.

Vorzugsweise ist die Montagehilfe aus einem recycelbaren Kunststoff hergestellt.

Ferner wird ein Verfahren zur Fixierung der Drehposition von drehbar gelagerten Wellen beansprucht, wobei die Dorne der Montagehilfe in die stirnseitigen Aufnahmebohrungen der Nockenwellen geschoben werden, die drehbar gelagerten Nockenwellen so gedreht werden, dass die Positionierelemente in die Positioniernuten eingreifen und die Positionierelemente in die Positioniernuten, insbesondere zur Vororientierung und Transportsicherung, geschoben werden.

Besonders vorteilhaft ist an dem Verfahren, dass der Monteur mit wenigen Handgriffen die Wellen in bestimmten Drehwinkeln zueinander ausrichten kann. Weiterhin kann die Montagehilfe mit nur einem Handgriff nach der Montage des Nockenwellenmoduls entfernt werden. Dies spart Zeit und Arbeitsaufwand gegenüber der üblichen manuellen Ausrichtung der Nockenwellen oder einem automatisierten Verfahren zum Ausrichten der Nockenwellen beim Fahrzeughersteller.

Die Erfindung wird nachstehend mit weiteren Einzelheiten unter Bezug auf die beigefügten schematischen Zeichnungen näher erläutert. Darin zeigen
- Fig. 1: eine perspektivische Ansicht einer Montagehilfe nach einem erfindungsgemäßen Ausführungsbeispiel;
- Fig. 1b: eine seitliche Ansicht der Montagehilfe gemäß Fig. 1;
- Fig. 1c: eine seitliche Ansicht Montagehilfe gemäß Fig. 1 aus einem anderen Winkel;
- Fig. 2: eine Draufsicht auf die Montagehilfe gemäß Fig. 1;
- Fig. 3: eine perspektivische Ansicht einer Montagehilfe nach einem weiteren erfindungsgemäßen Ausführungsbeispiel;
- Fig. 3b: einen Schnitt der Montagehilfe gemäß Fig. 3 und
- Fig. 4: eine perspektivische Ansicht einer Einlass- und Auslassnockenwelle, die mit der Montagehilfe verbindbar sind.

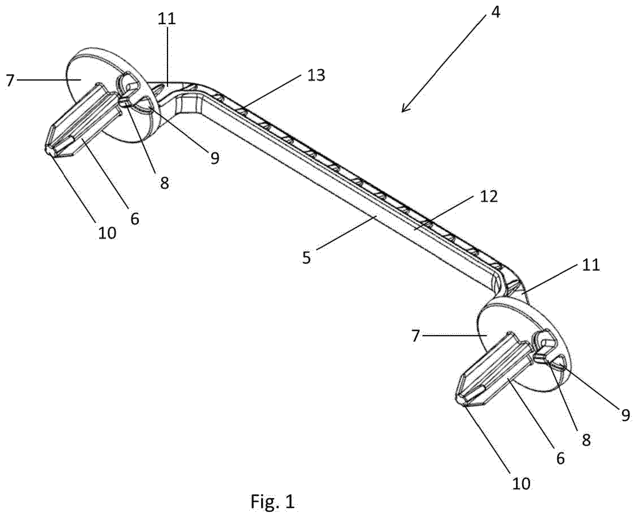

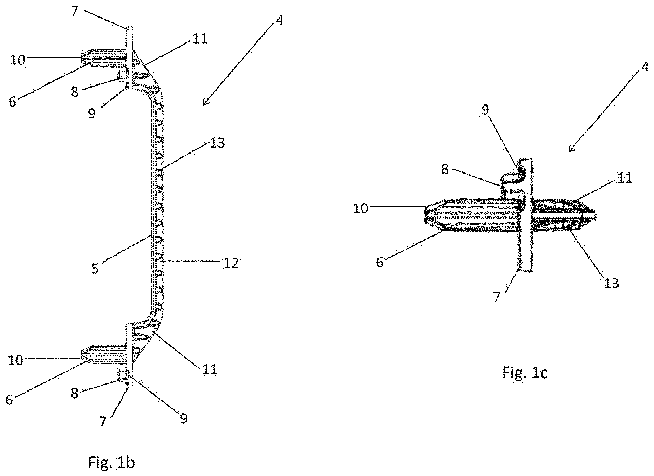

Fig. 1 zeigt eine perspektivische Ansicht einer Montagehilfe 4 nach einem bevorzugtem Ausführungsbeispiel. Die Montagehilfe 4 kann bevorzugt zur Fixierung der Drehposition von drehbar gelagerten Wellen eingesetzt werden und besonders bevorzugt zur Fixierung der Drehposition von drehbar gelagerten Einlassnockenwellen 1 und Auslassnockenwellen 2. Die Montagehilfe 4 weist zwei parallele Dorne 6 auf, die durch eine Brücke 5 miteinander verbunden sind, wobei jedem Dorn 6 ein Positionierelement 8 zugeordnet ist, das zumindest abschnittsweise exzentrisch zu dem jeweiligen Dorn 6 angeordnet ist. Die Brücke 5 erstreckt sich senkrecht zur Längsachse von einem Ende eines Dorns 6 zum Ende mindestens eines weiteren Dorns 6. Die Spitze 10 der Dorne 6 ist exemplarisch mit einer Verjüngung dargestellt. Die Verjüngung der Spitze 10 kann z.B. als Fase oder Rundung erfolgen. Die Spitze 10 kann wie dargestellt abgeflacht sein oder spitz zu laufen. Die Dorne 6 können verschiedene Formen aufweisen. Die Dorne 6 können wie im Ausführungsbeispiel einen kreuzförmigen Querschnitt aufweisen. Die Dorne 6 können z. B. auch zylindrisch, rechteckig oder auch in jeder beliebigen anderen Form ausgeführt sein.

Zwischen der Brücke 5 und den Dornen 6 ist jeweils ein Teller 7 ausgebildet, der sich senkrecht zur Längsachse des jeweiligen Dorns 6 erstreckt. Die Brücke 5 weist weiterhin zwei Endsegmente 11 und ein Verbindungssegment 12 auf. Die Endsegmente 11 sind beispielhaft in Fig. 1 an den Tellern 7 angeordnet und erstrecken sich parallel zur Längsachse der Dorne 6 von den Tellern 7 weg. Die Endsegmente 11 können eine beliebige Höhe aufweisen, um den Abstand zwischen den Dornen 6 oder den Tellern 7 und dem Verbindungssegment 12 zu definieren. Die Endsegmente 11 werden durch das Verbindungssegment 12 verbunden. Ferner ist die Brücke 5 zwischen dem Verbindungssegment 12 und den Endsegmenten 11 abgekröpft. Dies ist an den Fasen zwischen den Bauteilen erkennbar. Daraus ergibt sich, dass die Brücke 5 C-förmig als Griff ausgebildet ist. An dem Verbindungssegment 12 und den Endsegmenten 11 sind jeweils exemplarisch Verstärkungsrippen 13 angeordnet. Die Bauteile können eine Vielzahl von Verstärkungsrippen 13, wie im Ausführungsbeispiel dargestellt, aufweisen. Es ist jedoch möglich, nur eine oder auch keine Verstärkungsrippe 13 an den Bauteilen anzuordnen. Die Verstärkungsrippen 13 können dabei in jeder beliebigen Form oder Dicke ausgeführt werden. Es sind außerdem auch Sicken vorstellbar, die zur Erhöhung der Stabilität beitragen.

Die Form der Brücke 5, insbesondere der beiden Endsegmente 11 und des Verbindungssegment 12, ist frei wählbar. Im Ausführungsbeispiel ist die Brücke 5 mit einem Steg quer zur Längsachse der Dorne 6, der sich zwischen den Dornen erstreckt, und jeweils einem Steg, der sich entlang der Längsachse der Dorne 6 auf der Dorn 6 abgewandten Seite erstreckt, ausgebildet. Die Stege werden durch die Verstärkungsrippen 13 stabilisiert. Es ist ebenso möglich, die Brücke 5 z. B. zylindrisch, rechteckig oder in jeder anderen beliebigen Form auszuführen.

Ferner sind die Positionierelemente 8 jeweils radial beabstandet von den Dornen 6 angeordnet. Die Positionierelemente 8 sind so beabstandet, dass sie am Rand der Teller 7 ausgebildet sind. Die radiale Lage und Form der Positionierelemente 8, konkret deren Höhe, Breite, Länge und/oder der Abstand auf dem Teller 7 zum jeweiligen Dorn 6, richten sich nach den jeweiligen Positioniernuten 15, die in den Wellen, insbesondere Nockenwellen ausgebildet sind. Im montierten Zustand bilden die Positionierelemente 8 und die Positioniernuten 15 einen Formschluss. Die Positionierelemente 8 und die Positioniernuten 15 können als eine Nut-Federanordnung ausgebildet sein.

Die Positionierelemente 8 sind jeweils in einer Ausnehmung 9 des Tellers 7 angeordnet.

In einem nicht dargestellten Ausführungsbeispiel können die Positionierelemente 8 alternativ direkt am Dorn 6 angeordnet sein und sich von diesem radial nach außen erstrecken. Die Ausnehmung kann um das Positionierelement 8 und um den Dorn 6 angeordnet sein.

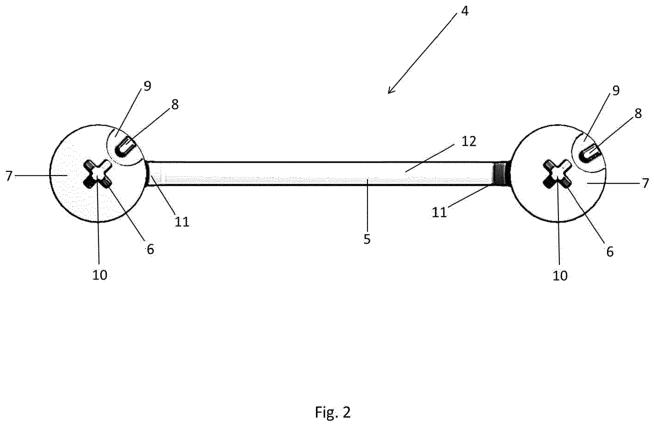

Fig. 2 ist eine Draufsicht auf die Montagehilfe 4 gemäß Fig. 1, wobei die Dorne 6 in einer Draufsicht auf die verjüngende Spitze 10 gezeigt sind. Daher erstrecken sich die Teller 7 senkrecht zur Längsachse der Dorne 6 und spannen eine Ebene auf, die hier beispielhaft als Kreisfläche dargestellt ist. Die Teller 7 können rechteckig, dreieckig, oval oder in jeder beliebigen anderen Form ausgeführt sein. Auf der Kreisfläche der Teller 7 sind die radial beabstandeten, in der Ausnehmung 9 am Rand der Teller 7 angeordneten Positionierelemente 8 dargestellt.

Wie in Fig. 2 ersichtlich sind die Positionierelemente 8 in verschiedenen Winkeln auf der Kreisfläche angeordnet, die den vororientierten Drehwinkeln der Wellen entsprechen.

Die Montagehilfe 4 ist in diesem Ausführungsbeispiel einteilig ausgeführt. Die komplette Montagehilfe 4 kann in einem Verfahrensschritt mit einem Spritzgussverfahren hergestellt werden. Dafür sind zudem die Rundungen an der Montagehilfe 4 vorgesehen. Es ist auch denkbar, die Montagehilfe 4 in einem weiteren, nicht dargestellten Ausführungsbeispiel mehrteilig zu fertigen. Dafür wird eine lösbare Verbindung zwischen der Brücke 5 und den Dornen 6 und/oder den Tellern 7 vorgesehen. Die lösbare Verbindung ist so gestaltet, dass die Brücke 5 und die Dorne 6 und/oder die Teller 7 in nur einem genau definierten Winkel verbunden werden können. Somit ist gewährleistet, dass die Wellen exakt vororientiert werden können.

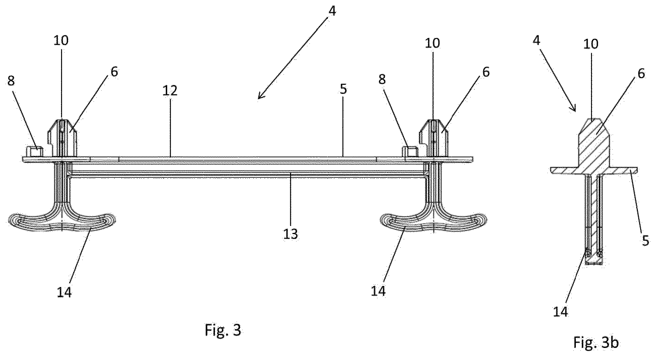

Fig. 3 ist eine perspektivische Ansicht einer Montagehilfe 4 nach einem weiteren Ausführungsbeispiel, die zwei parallele Dorne 6 aufweist, die in diesem Ausführungsbeispiel senkrecht zu ihrer Längsachse mit einer Brücke 5 verbunden sind. Die Positionierelemente 8 sind zu jedem Dorn 6 radial beabstandet angeordnet. Auf der dornabgewandten Seite erstreckt sich ein T-förmiger Griff 14. Die T-Form wird aus einem Steg, dessen Mittelachse kongruent mit der Längsachse der Dorne 6 ist, und einer Grifffläche, die sich beidseitig von der Mittelachse parallel zur Brücke 5 erstreckt, ausgebildet (s. Fig. 3b). Die Brücke 5 erstreckt sich in diesem Ausführungsbeispiel als Steg quer zur Längsachse der Dorne 6 zwischen den T-förmigen Griffen 14 und den Dornen 6. Auf der dornabgewandten Seite auf dem Steg der Brücke 5 erstreckt sich eine durchgehende Verstärkungsrippe 13, die an den Stegen der T-förmigen Griffe 14 angeordnet ist.

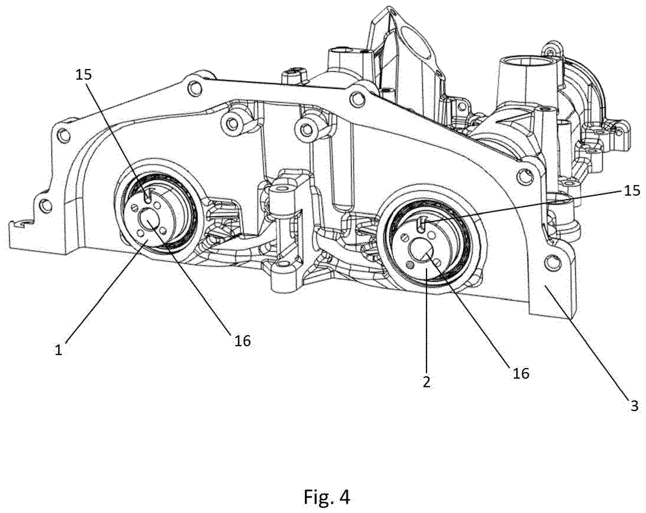

Fig. 4 zeigt eine perspektivische Ansicht einer Einlassnockenwelle 1 und einer Auslassnockenwelle 2, welche in einer Haube 3 montiert sind. Die Nockenwellen sind in die Haube 3 integriert und drehbar gelagert. Die Enden der Einlassnockenwelle 1 und der Auslassnockenwelle 2 ragen aus der Haube 3 heraus. An den Außenrändern am stirnseitigen Ende der Nockenwellen sind beispielhaft die Positioniernuten 15 für die Positionierelemente 8 dargestellt. Ferner sind die stirnseitigen, mittigen Aufnahmebohrungen 16 der Nockenwellen für die Dorne 6 gezeigt. Die Positioniernuten 15 sind exzentrisch zu den Aufnahmebohrungen 16 angeordnet.

Die Positioniernuten 15 können alternativ innen an den stirnseitigen Aufnahmebohrungen 16 angeordnet sein und sich von diesen radial zum Außenrand der Welle erstrecken.

Die in Fig.1 dargestellte Montagehilfe 4 wird mit den beiden Dornen 6 in die stirnseitigen Aufnahmebohrungen 16 der Einlassnockenwelle 1 und der Auslassnockenwelle 2 eingeschoben. Nach diesem Verfahrensschritt werden die drehbar gelagerten Nockenwellen so gedreht, dass die Positionierelemente 8 in die Positioniernuten 15 eingreifen. Die Dorne 6 und die Positionierelemente 8 werden so weit in die stirnseitigen Aufnahmebohrungen 16 der Nockenwellen geschoben, dass die Teller 7 bündig mit den Wellenenden abschließen. Nach diesem Schritt bilden die Positionierelemente 8 und die Positioniernuten 15 einen Formschluss. Folglich sind die Wellen vororientiert und transportgesichert.

### Bezugszeichenliste

- 1: Einlassnockenwelle
- 2: Auslassnockenwelle
- 3: Haube
- 4: Montagehilfe
- 5: Brücke
- 6: Dorn
- 7: Teller
- 8: Positionierelement
- 9: Ausnehmung
- 10: Spitze
- 11: Endsegment
- 12: Verbindungssegment
- 13: Verstärkungsrippe
- 14: T-förmiger Griff
- 15: Positioniernut
- 16: stirnseitige Aufnahmebohrung

## Patentansprüche

1. Montagehilfe zur Fixierung der Drehposition von drehbar gelagerten Nockenwellen, wobei die Montagehilfe mindestens zwei parallele Dorne (6) aufweist, die durch eine Brücke (5) miteinander verbunden sind, wobei jedem Dorn (6) ein Positionierelement (8) zugeordnet ist, das zumindest abschnittsweise exzentrisch zu dem jeweiligen Dorn (6) angeordnet ist,
**dadurch gekennzeichnet, dass**
jeweils ein Dorn (6) der Montagehilfe (4) in eine stirnseitige Aufnahmebohrung (16) einer der Nockenwellen und das jeweils zugehörige Positionierelement (8) in eine stirnseitige Positioniernut (15) dieser Nockenwelle einschiebbar sind.

2. Montagehilfe nach Anspruch 1,
**dadurch gekennzeichnet, dass**
das Positionierelement (8) radial von dem Dorn (6) beabstandet angeordnet ist.

3. Montagehilfe nach einem der vorhergehenden Ansprüche,
**dadurch gekennzeichnet, dass**
die Positionierelemente (8) bezüglich des jeweils zugeordneten Dorns (6) in verschiedenen Drehwinkeln zueinander ausgerichtet sind.

4. Montagehilfe nach Anspruch 1,
**dadurch gekennzeichnet, dass**
die Dorne (6) jeweils eine sich verjüngende Spitze (10) aufweisen.

5. Montagehilfe nach einem der Ansprüche 1 oder 2,
**dadurch gekennzeichnet, dass**
die Brücke (5) zwei Endsegmente (11) und ein Verbindungssegment (12) aufweist, wobei die Brücke (5) zwischen dem Verbindungsegment (12) und den Endsegmenten (11) abgekröpft ist.

6. Montagehilfe nach einem der vorhergehenden Ansprüche,
**dadurch gekennzeichnet, dass**
die Brücke (5) als C-förmiger Griff ausgebildet ist.

7. Montagehilfe nach einem der vorhergehenden Ansprüche,
**dadurch gekennzeichnet, dass**
die Brücke (5), insbesondere die Endsegmente (11) und/oder das Verbindungssegment (12), mindestens eine Verstärkungsrippe (13) aufweist.

8. Montagehilfe nach einem der vorhergehenden Ansprüche,
**dadurch gekennzeichnet, dass**
zwischen der Brücke (5) und dem Dorn (6) ein Teller (7) ausgebildet ist, der sich senkrecht zur Längsachse des Dorns (6) erstreckt.

9. Montagehilfe nach Anspruch 8,
**dadurch gekennzeichnet, dass**
der Teller (7) mindestens eine Ausnehmung (9) aufweist, wobei das Positionierelement (8) und/oder der Dorn (6) in der Ausnehmung (9) angeordnet ist.

10. Montagehilfe nach einem der Ansprüche 6 bis 7,
**dadurch gekennzeichnet, dass**
auf einer von dem Dorn (6) abgewandten Seite des Tellers (7) ein T-förmiger Griff (14) ausgebildet ist.

11. Montagehilfe nach einem der vorhergehenden Ansprüche,
**dadurch gekennzeichnet, dass**
die Montagehilfe (4) einteilig, insbesondere aus Kunststoff, gefertigt ist.

12. Montagehilfe nach einem der Ansprüche 1 bis 10,
**dadurch gekennzeichnet, dass**
die Montagehilfe (4) mehrteilig gefertigt ist, wobei die Brücke (5) lösbar mit den Dornen (6) und/oder mit den Tellern (7) verbunden ist.

13. Nockenwellenmodul mit einer Montagehilfe nach einem der vorhergehenden Ansprüche, und
zwei parallel angeordneten Nockenwellen, die jeweils eine stirnseitige Aufnahmebohrung (16) und eine stirnseitige Positioniernut (15) aufweisen, wobei jeweils ein Dorn (6) der Montagehilfe (4) in eine Aufnahmebohrung (16) und ein Positionierelement (8) in eine Positioniernut (15) eingreifen derart, dass eine relative Drehorientierung der Nockenwellen zueinander festgelegt ist.

14. Verfahren zur Fixierung der Drehposition von drehbar gelagerten Nockenwellen, bei dem
die Dorne (6) der Montagehilfe (4) gemäß Anspruch 1 in stirnseitige Aufnahmebohrungen (16) der Nockenwellen geschoben werden, die drehbar gelagerten Nockenwellen so gedreht werden, dass die Positionierelemente (8) in die Positioniernuten (15) eingreifen und die Positionierelemente (8) in die Positioniernuten (15), insbesondere zur Vororientierung und Transportsicherung, geschoben werden.

## Claims

1. An assembly aid for fixing the rotational position of rotatably mounted camshafts,
**whereas**
the assembly aid has at least two parallel mandrels (6) which are connected to one another by way of a bridge (5), each mandrel (6) being assigned a positioning element (8) which is arranged at least in sections eccentrically with respect to the respective mandrel (6) **characterized in that** a respective mandrel (6) of the assembly aid (4) is inserted into a end side receiving bore (16) on the end face of one of the camshafts and the respective associated positioning element (8) into a positioning groove (15) on the end face of this camshaft.

2. The assembly aid as claimed in claim 1,
**characterized in that**
the positioning element (8) is arranged spaced apart radially from the mandrel (6).

3. The assembly aid as claimed in either of the preceding claims,
**characterized in that**
the positioning elements (8) are oriented at different rotational angles to each other with regard to the respective associated mandrel (6).

4. The assembly aid as claimed in claim 1,
**characterized in that**
the mandrels (6) in each case have a tapering tip (10).

5. The assembly aid as claimed in either of claims 1 and 2,
**characterized in that**
the bridge (5) has two end segments (11) and a connecting segment (12), the bridge (5) being angled off between the connecting segment (12) and the end segments (11).

6. The assembly aid as claimed in one of the preceding claims,
**characterized in that**
the bridge (45) is configured as a C-shaped handle.

7. The assembly aid as claimed in one of the preceding claims,
**characterized in that**
the bridge (5), in particular the end segments (11) and/or the connecting segment (12), has at least one reinforcing rib (13).

8. The assembly aid as claimed in one of the preceding claims,
**characterized in that**
a plate (7) is configured between the bridge (5) and the mandrel (6), which plate (7) extends perpendicularly with respect to the longitudinal axis of the mandrel (6).

9. The assembly aid as claimed in claim 8,
**characterized in that**
the plate (7) has at least one recess (9), the positioning element (8) and/or the mandrel (6) being arranged in the recess (9).

10. The assembly aid as claimed in either of claims 6 and 7,
**characterized in that**
a T-shaped handle (14) is configured on a side of the plate (7), which side faces away from the mandrel (6).

11. The assembly aid as claimed in one of the preceding claims,
**characterized in that**
the assembly aid (4) is manufactured in one piece, in particular from plastic.

12. The assembly aid as claimed in one of claims 1 to 10,
**characterized in that**
the assembly aid (4) is manufactured in multiple pieces, the bridge (5) being connected releasably to the mandrels (6) and/or to the plates (7).

13. A camshaft module having an assembly aid as claimed in one of the preceding claims, and
two camshafts which are arranged in parallel and in each case have an end-side receiving bore (16) and an end-side positioning groove (15), in each case a mandrel (6) of the assembly aid (4) engaging into a receiving bore (16) and a positioning element (8) engaging into a positioning groove (15) in such a way that a relative rotational orientation of the camshafts with respect to one another is fixed.

14. A method for fixing the rotational position of rotatably mounted camshafts according to claim 1, in which method
the mandrels (6) of the assembly aid (4) are pushed into end-side receiving bores (16) of the camshafts, and the rotatably mounted camshafts are rotated in such a way that the positioning elements (8) engage into the positioning grooves (15) and the positioning elements (8) are pushed into the positioning grooves (15), in particular for preorientation and locking for transport.

## Revendications

1. Dispositif d'aide au montage permettant de fixer la position de rotation d'arbres à cames montés rotatifs, le dispositif d'aide au montage comprenant au moins deux mandrins (6) parallèles, lesquels sont reliés l'un à l'autre par un pont (5), un élément de positionnement (8) étant associé à chaque mandrin (6), lequel élément de positionnement est disposé au moins dans certaines parties de manière excentrique par rapport au mandrin (6) respectif,
**caractérisé en ce que**
respectivement un mandrin (6) du dispositif d'aide au montage (4) peut être inséré dans un alésage de réception (16) côté frontal de l'un des arbres à cames et l'élément de positionnement (8) respectivement associé peut être inséré dans une rainure de positionnement (15) côté frontal de cet arbre à cames.

2. Dispositif d'aide au montage selon la revendication 1,
**caractérisé en ce que**
l'élément de positionnement (8) est disposé de manière espacée radialement du mandrin (6).

3. Dispositif d'aide au montage selon l'une des revendications précédentes,
**caractérisé en ce que**
les éléments de positionnement (8) sont orientés suivant différents angles de rotation par rapport au mandrin (6) respectivement associé.

4. Dispositif d'aide au montage selon la revendication 1,
**caractérisé en ce que**
les mandrins (6) comprennent respectivement une pointe (10) se rétrécissant.

5. Dispositif d'aide au montage selon l'une des revendications 1 et 2,
**caractérisé en ce que**
le pont (5) comprend deux segments d'extrémité (11) et un segment de liaison (12), le pont (5) étant coudé entre le segment de liaison (12) et les segments d'extrémité (11).

6. Dispositif d'aide au montage selon l'une des revendications précédentes,
**caractérisé en ce que**
le pont (5) est réalisé sous forme de poignée en forme de C.

7. Dispositif d'aide au montage selon l'une des revendications précédentes,
**caractérisé en ce que**
le pont (5), en particulier les segments d'extrémité (11) et/ou le segment de liaison (12), comprennent au moins une nervure de renforcement (13).

8. Dispositif d'aide au montage selon l'une des revendications précédentes,
**caractérisé en ce**
**qu'**un plateau (7) est réalisé entre le pont (5) et le mandrin (6), lequel plateau s'étend perpendiculairement à l'axe longitudinal du mandrin (6).

9. Dispositif d'aide au montage selon la revendication 8,
**caractérisé en ce que**
le plateau (7) comprend au moins un évidement (9), l'élément de positionnement (8) et/ou le mandrin (6) étant disposés dans l'évidement (9).

10. Dispositif d'aide au montage selon l'une des revendications 6 et 7,
**caractérisé en ce**
**qu'**une poignée (14) en forme de T est réalisée sur un côté du plateau (7) opposé au mandrin (6).

11. Dispositif d'aide au montage selon l'une des revendications précédentes,
**caractérisé en ce que**
le dispositif d'aide au montage (4) est fabriqué d'une seule partie, en particulier à partir de matière synthétique.

12. Dispositif d'aide au montage selon l'une des revendications 1 à 10,
**caractérisé en ce que**
le dispositif d'aide au montage (4) est fabriqué en plusieurs parties, le pont (5) étant relié de manière amovible aux mandrins (6) et/ou aux plateaux (7).

13. Module d'arbre à cames comportant un dispositif d'aide au montage selon l'une des revendications précédentes, et
deux arbres à cames disposés parallèlement, lesquels comprennent respectivement un alésage de réception (16) côté frontal et une rainure de positionnement (15) côté frontal, et respectivement un mandrin (6) du dispositif d'aide au montage (4) venant en prise dans un alésage de réception (16) et un élément de positionnement (8) venant en prise dans une rainure de positionnement (15) de telle sorte qu'une orientation en rotation relative des arbres à cames l'un par rapport à l'autre soit fixée.

14. Procédé permettant de fixer la position de rotation d'arbre à cames montés rotatifs, dans lequel
les mandrins (6) du dispositif d'aide au montage (4) selon la revendication 1 sont poussés dans des alésages de réception (16) côté frontal des arbres à cames, les arbres à cames montés rotatifs sont entraînés en rotation de telle sorte que les éléments de positionnement (8) viennent en prise dans les rainures de positionnement (15) et les éléments de positionnement (8) sont poussés dans les rainures de positionnement (15), en particulier pour la pré-orientation et la fixation pendant le transport.
